# EUROPEAN PATENT SPECIFICATION

(11) **EP 4 321 817 B1**
(45) Date of publication and mention of the grant of the patent: **25.11.2026**
(21) Application number: 22858584.0
(22) Date of filing: 09.06.2022
(51) Int. Cl.: F24F 12/00, F24F 3/14, F24F 7/08, F24F 13/20, F24F 13/28, F24F 13/22, F24F 13/30, F24F 3/147

(54) **VENTILATION APPARATUS AND VENTILATION SYSTEM HAVING SAME**
BELÜFTUNGSVORRICHTUNG UND BELÜFTUNGSSYSTEM DAMIT
APPAREIL DE VENTILATION ET SYSTÈME DE VENTILATION DOTÉ DE CELUI-CI

(30) Priority: 18.08.2021 KR 20210108916
(43) Date of publication of application: 14.02.2024
(60) Divisional application: 26210100.9 / 4 844 290
(73) Proprietor: Samsung Electronics Co., Ltd., Suwon-si, Gyeonggi-do 16677 (KR)
(72) Inventor: CHOI, Taesung, Suwon-si Gyeonggi-do 16677 (KR); KIM, Kyunghoon, Suwon-si Gyeonggi-do 16677 (KR); NA, Seonuk, Suwon-si Gyeonggi-do 16677 (KR); SEO, Hyeongjoon, Suwon-si Gyeonggi-do 16677 (KR); SIM, Jaehyoung, Suwon-si Gyeonggi-do 16677 (KR); JANG, Eomji, Suwon-si Gyeonggi-do 16677 (KR); CHO, Sungjune, Suwon-si Gyeonggi-do 16677 (KR)
(74) Representative: Walaski, Jan Filip
(86) International application number: PCT/KR2022/008116
(87) International publication number: WO 2023/022342

(56) References cited:
- JP-B2- 6 305 525
- KR-A- 20180 089 623
- KR-A- 20180 089 623
- KR-A- 20200 079 060
- KR-A- 20200 079 060
- KR-B1- 102 147 675
- KR-B1- 102 147 675
- KR-B1- 102 232 441
- KR-B1- 102 254 003
- US-A1- 2019 293 319

## Description

### [Technical Field]

The present invention relates to a ventilation apparatus, and more particularly, to a ventilation apparatus configured to provide comfortable air and a ventilation system including the same.

### [Background Art]

A ventilation apparatus is a device configured to supply outdoor air to a room or exchange indoor air with outdoor air to ventilate an indoor space.

Conventional ventilation apparatuses have only a function of controlling an indoor temperature and humidity through total heat exchange that occurs between outdoor air and indoor air while the outdoor air and indoor air pass through a total enthalpy heat exchanger. Accordingly, the dehumidification of the outdoor air supplied to the room is incomplete, and it is difficult to maintain the indoor temperature and humidity in a comfortable state.
US 2019/293319 A1 discloses a heat exchange ventilator that performs ventilation while exchanging heat between a supply air flow and an exhaust air flow.
KR 102232441 B1 discloses a six-chamber air conditioner for controlling indoor air environment.

### [Disclosure]

### [Technical Problem]

Therefore, it is an object of the present invention to provide a ventilation apparatus capable of adjusting a humidity of air supplied to a room in a comfortable state, and a ventilation system including the same.

It is another object of the present invention to provide a ventilation apparatus, capable of being bilateral-symmetrically arranged with the same configuration.

It is another aspect of the present invention to provide a ventilation apparatus capable of circulating indoor air as well as outdoor air to control a humidity of air, which is supplied to a room, in a comfortable state, and a ventilation system including the same.

### [Technical Solution]

According to an aspect of the invention, there is provided a ventilation apparatus as set out in claim 1. Preferred embodiments of the present invention are defined in the dependent claims. In accordance with an aspect of the invention, a ventilation apparatus includes comprising a housing including an inlet flow path provided to discharge guide outdoor air, which is introduced through a first inlet, to flow to an indoor space through a first outlet, and an outlet flow path provided to discharge guide indoor air, which is introduced through a second inlet, to flow to an outdoor space through a second outlet, a connection flow path provided to connect the inlet flow path to the outlet flow path, and a connection path opening and closing unit configured to selectively open and close the connection flow path, a total enthalpy heat exchanger provided to exchange heat with in which air flowing on along the inlet flow path and air flowing on along the outlet flow path exchange heat with each other, and a heat exchanger configured to remove moisture in the air flowing on along the inlet flow path, . The housing includes a connection flow path provided to connect the inlet flow path to the outlet flow path, and a connection path opening and closing unit configured to selectively open and close the connection flow path. The connection flow path is provided to allow the indoor air, which is introduced through the second inlet, to pass through the heat exchanger and flow to the first outlet while preventing the indoor air from flowing to the total enthalpy heat exchanger.

The housing includes a first inlet chamber forming a portion of the inlet flow path and formed positioned between the first inlet and the total enthalpy heat exchanger; a second inlet chamber forming another portion of the inlet flow path and positioned between the first outlet and the total enthalpy heat exchanger; a first outlet chamber forming a portion of the outlet flow path and positioned between the second inlet and the total enthalpy heat exchanger; and a second outlet chamber forming another portion of the outlet flow path and positioned between the second outlet and the total enthalpy heat exchanger. The heat exchanger is arranged in the second inlet chamber.

The connection flow path is provided to connect the first outlet chamber to the second inlet chamber.

The ventilation apparatus may further include a filter provided to collect foreign substances in the outdoor air introduced through the first inlet, and arranged to face an intake end of the total enthalpy heat exchanger provided to communicate with the first inlet.

The connection flow path may be provided to allow indoor air, which is introduced through the second inlet, to pass through the heat exchanger and flow to the first outlet while preventing the indoor air from flowing to the total enthalpy heat exchanger and the filter.

The ventilation apparatus may further include a first blower provided on along the inlet flow path to move the outdoor air, and a second blower provided on along the outlet flow path to move the indoor air. The first blower may be arranged in the second inlet chamber, and the second blower may be arranged in the second outlet chamber.

The housing may further include a first inlet opening and closing unit configured to open and close the first inlet. The first inlet opening and closing unit may close the first inlet in response to opening the connection path opening and closing unit opening.

The second blower may not be driven in response to opening the connection path opening and closing unit opening.

According to the present invention, the ventilation apparatus further includes a drain tray provided to collect condensed water generated by the heat exchanger. The housing further includes a first housing comprising a first hole formed asymmetrically on one a surface with respect to a center line of the one surface extending in along a long axis direction or a short axis direction of the one surface of the housing, the first hole provided to allow the drain tray and the total enthalpy heat exchanger to be drawn out to an outside of the housing, and a second housing coupled couplable to the first housing in an up and down direction, and comprising a second hole arranged on another surface of the housing and formed in a shape corresponding to the first hole in the up and down direction.

At least a portion of the second inlet chamber may be formed by the other surface of the housing, and at least a portion of the first outlet chamber may be formed by the other surface of the housing. The housing may further include a partition wall arranged between the second inlet chamber and the first outlet chamber, and provided to define the second inlet chamber and the first outlet chamber inside the housing. The connection path opening and closing unit may be arranged on the partition wall.

The total enthalpy heat exchanger may be arranged adjacent to one side of the housing rather than another side of the housing on a center of the one side and the other side of the housing with respect to a center line extending in along a direction in which the one side and the other side of the housing extend.

The first hole may include a first region through which the total enthalpy heat exchanger is drawn out, and a second region through which the drain tray is drawn out. The first region may be arranged adjacent to the one side of the housing rather than the other side of the housing on the center of the one side and the other side of the housing with respect to the center line extending in along the direction in which the one side and the other side of the housing extend.

The second inlet chamber may be provided to have a larger internal space than the first inlet chamber, the first outlet chamber, and the second outlet chamber.

The first housing may include a first inlet forming portion forming a portion of the first inlet, a first outlet forming portion forming a portion of the first outlet, a second inlet forming portion forming a portion of the second inlet, and a second outlet forming portion forming a portion of the second outlet, and the second housing may include a first inlet forming portion forming another portion of the first inlet, a first outlet forming portion forming another other portion of the first outlet, a second inlet forming portion forming another portion of the second inlet, and a second outlet forming portion forming another portion of the second outlet. The first outlet forming portion of the first housing and the first outlet forming portion of the second housing may be formed symmetrically in along the up and down direction, the first inlet forming portion of the first housing and the first inlet forming portion of the second housing may be formed symmetrically in along the up and down direction, the second outlet forming portion of the first housing and the second outlet forming portion of the second housing may be formed symmetrically in along the up and down direction, and the second inlet forming portion of the first housing and the second inlet forming portion of the second housing may be formed symmetrically in along the up and down direction. In accordance with another aspect of the disclosure, a ventilation system includes an outdoor unit, and a ventilation apparatus connected to the outdoor unit so as to supply air to an indoor space. The ventilation includes a housing including an inlet flow path provided to discharge outdoor air, which is introduced through a first inlet, to an indoor space through a first outlet, and an outlet flow path provided to discharge indoor air, which is introduced through a second inlet, to an outdoor space through a second outlet, a total enthalpy heat exchanger in which air flowing on the inlet flow path and air flowing on the outlet flow path exchange heat with each other, and a heat exchanger configured to remove moisture in the air flowing on the inlet flow path. The housing includes a connection flow path provided to connect the inlet flow path to the outlet flow path, and a connection path opening and closing unit configured to selectively open and close the connection flow path. The up and down direction, the first inlet forming portion of the first housing and the first inlet forming portion of the second housing may be formed symmetrically in along the up and down direction, the second outlet forming portion of the first housing and the second outlet forming portion of the second housing may be formed symmetrically in along the up and down direction, and the second inlet forming portion of the first housing and the second inlet forming portion of the second housing may be formed symmetrically in along the up and down direction. In accordance with another aspect of the present invention, a ventilation system includes an outdoor unit, and a ventilation apparatus connected to the outdoor unit so as to supply air to an indoor space. The ventilation apparatus includes a housing including an inlet flow path provided to discharge outdoor air, which is introduced through a first inlet, to an indoor space through a first outlet, and an outlet flow path provided to discharge indoor air, which is introduced through a second inlet, to an outdoor space through a second outlet, a total enthalpy heat exchanger in which air flowing on the inlet flow path and air flowing on the outlet flow path exchange heat with each other, and a heat exchanger configured to remove moisture in the air flowing on the inlet flow path. The housing includes a connection flow path provided to connect the inlet flow path to the outlet flow path, and a connection path opening and closing unit configured to selectively open and close the connection flow path. The connection flow path is provided to allow indoor air, which is introduced through the second inlet, to pass through the heat exchanger and flow to the first outlet while preventing the indoor air from flowing to the total enthalpy heat exchanger.

According to the present invention, the housing includes a first inlet chamber provided to form a portion of the inlet flow path and formed between the first inlet and the total enthalpy heat exchanger, a second inlet chamber provided to form other portion of the inlet flow path and formed between the first outlet and the total enthalpy heat exchanger, a first outlet chamber provided to form a portion of the outlet flow path and formed between the second inlet and the total enthalpy heat exchanger, and a second outlet chamber provided to form other portion of the outlet flow path and formed between the second outlet and the total enthalpy heat exchanger. The heat exchanger is arranged in the second inlet chamber.

The connection flow path is provided to connect the first outlet chamber to the second inlet chamber.

The ventilation system may further include a filter provided to collect foreign substances in the outdoor air introduced through the first inlet, and arranged to face an intake end of the total enthalpy heat exchanger provided to communicate with the first inlet. The connection flow path may be provided to allow indoor air, which is introduced through the second inlet, to pass through the heat exchanger and flow to the first outlet while preventing the indoor air from flowing to the total enthalpy heat exchanger and the filter.

In accordance with another aspect of the present invention, a ventilation apparatus includes a housing including an inlet flow path provided to discharge outdoor air, which is introduced through a first inlet, to an indoor space through a first outlet, an outlet flow path provided to discharge indoor air, which is introduced through a second inlet, to an outdoor space through a second outlet, and a connection flow path provided to connect the inlet flow path to the outlet flow path, a total enthalpy heat exchanger in which air flowing on the inlet flow path and air flowing on the outlet flow path exchange heat with each other, and a heat exchanger configured to remove moisture in the air flowing on the inlet flow path. The housing is provided to define a first inlet chamber formed between the first inlet and the total enthalpy heat exchanger, a second inlet chamber formed between the first outlet and the total enthalpy heat exchanger, a first outlet chamber formed between the second inlet and the total enthalpy heat exchanger, and a second outlet chamber formed between the second outlet and the total enthalpy heat exchanger inside the housing. The heat exchanger is arranged in the second inlet chamber. The ventilation apparatus is configured to be driven in one mode between a first mode in which air, which is introduced to the housing through the first inlet, is moved to the first outlet through the first inlet chamber, the total enthalpy heat exchanger, and the second inlet chamber, and a second mode in which air, which is introduced to the housing through the second inlet, is moved to the first outlet through the first outlet chamber, the connection flow path, and the second inlet chamber.

### [Advantageous Effects]

As is apparent from the above description, a ventilation apparatus may adjust a humidity of outdoor air, which is sucked, by using a heat exchanger arranged on an inlet flow path, and then supply the air to an indoor space. Therefore, the ventilation apparatus may maintain the humidity of the indoor space in a comfortable state.

In a pair of ventilation apparatuses arranged bilateral-symmetrically, configurations forming the ventilation apparatuses are identical to each other, and thus a production cost may be reduced.

A ventilation apparatus may include a connection flow path provided to connect an inlet flow path to an outlet flow path, and an opening and closing unit configured to open and close the connection flow path, and thus the ventilation apparatus may maintain a humidify of indoor space in a predetermined level by circulating indoor air as well outdoor air.

### [Description of Drawings]

FIG. 1 is a view illustrating a ventilation system including a pair of ventilation apparatuses, each according to an embodiment of the present invention,
FIG. 2 is a view illustrating a ventilation apparatus shown in FIG. 1, in a state in which some components of a first type-ventilation apparatus are removed, from the top to the bottom;
FIG. 3 is a view schematically illustrating an air flow of the ventilation system according to an embodiment of the present invention;
FIG. 4 is an exploded perspective view illustrating the first type-ventilation apparatus shown in FIG. 1;
FIG. 5 is a view illustrating the first type-ventilation apparatus shown in FIG. 1, in a state in which some components of the ventilation apparatus are removed, from the bottom to the top;
FIG. 6 is a perspective view illustrating a second housing of the first type-ventilation apparatus shown in FIG. 1;
FIG. 7 is a perspective view illustrating a first housing of the first type-ventilation apparatus shown in FIG. 1;
FIG. 8 is a view illustrating a state in which an upper housing and a lower housing of the first type-ventilation apparatus shown in FIG. 1 are arranged in the left and right direction;
FIG. 9 is an exploded perspective view illustrating a second type-ventilation apparatus shown in FIG. 1;
FIG. 10 is a view illustrating the ventilation apparatus shown in FIG. 1, in a state in which some components of the second type-ventilation apparatus are removed, from the top to the bottom;
FIG. 11 is a view schematically illustrating an air flow of the first type-ventilation apparatus shown in FIG. 1;
FIG. 12 is a view schematically illustrating an air flow in a mode different from the air flow, shown in FIG. 11, of the first type-ventilation apparatus shown in FIG. 1; and
FIG. 13 is a view illustrating a ventilation apparatus according to another embodiment of the present invention, in a state in which some components of a first type-ventilation apparatus are removed, from the top to the bottom.

### [Modes of the Disclosure]

Embodiments described in the disclosure and configurations shown in the drawings are merely examples of the embodiments of the present invention, and may be modified in various different ways without departing from the scope of the present invention as defined in the appended claims.

In addition, the same reference numerals or signs shown in the drawings of the disclosure indicate elements or components performing substantially the same function. The shapes and sizes of elements in the drawings may be exaggerated for the clear description.

It will be understood that when an element is referred to as being "connected" to another element, it can be directly or indirectly connected to the other element, wherein the indirect connection includes "connection via a wireless communication network"

Also, the terms used herein are used to describe the embodiments and are not intended to limit and / or restrict the scope of protection of the present invention. The singular forms "a," "an" and "the" are intended to include the plural forms as well, unless the context clearly indicates otherwise. In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

It will be understood that, although the terms first, second, third, etc., may be used herein to describe various elements, but elements are not limited by these terms. These terms are only used to distinguish one element from another element. For example, without departing from the scope of the present invention, a first element may be termed as a second element, and a second element may be termed as a first element. The term of "and / or" includes a plurality of combinations of relevant items or any one item among a plurality of relevant items.

In the following detailed description, the terms of "front", "rear ", "upper portion", "lower portion" and the like may be defined by the drawings, but the shape and the location of the component is not limited by the term.

The present invention will be described more fully hereinafter with reference to the accompanying drawings.

Therefore, it is an object of the present invention to provide a ventilation apparatus capable of adjusting a humidity of air supplied to a room in a comfortable state, and a ventilation system including the same.

It is another object of the present invention to provide a ventilation apparatus, to be required to be bilateral symmetry, capable of being bilateral-symmetrically arranged with the same configuration, and a ventilation system including the same.

It is another object of the present invention to provide a ventilation apparatus capable of circulating indoor air as well as outdoor air to control a humidity of air, which is supplied to a room, in a comfortable state, and a ventilation system including the same.

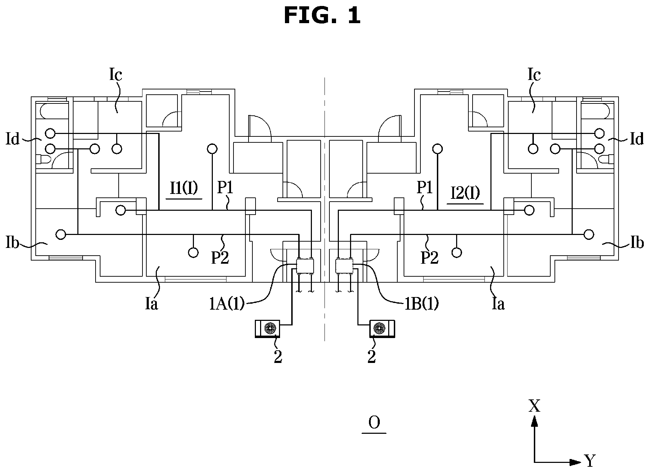

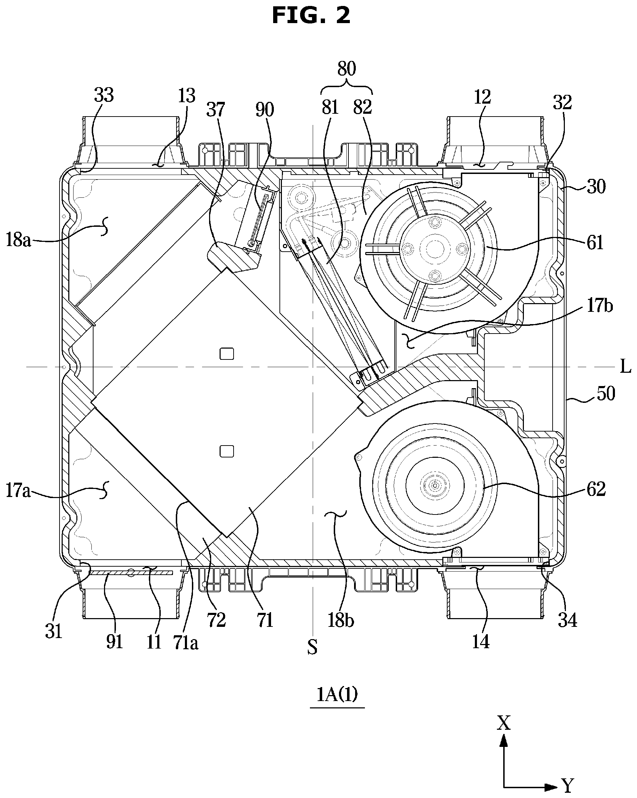

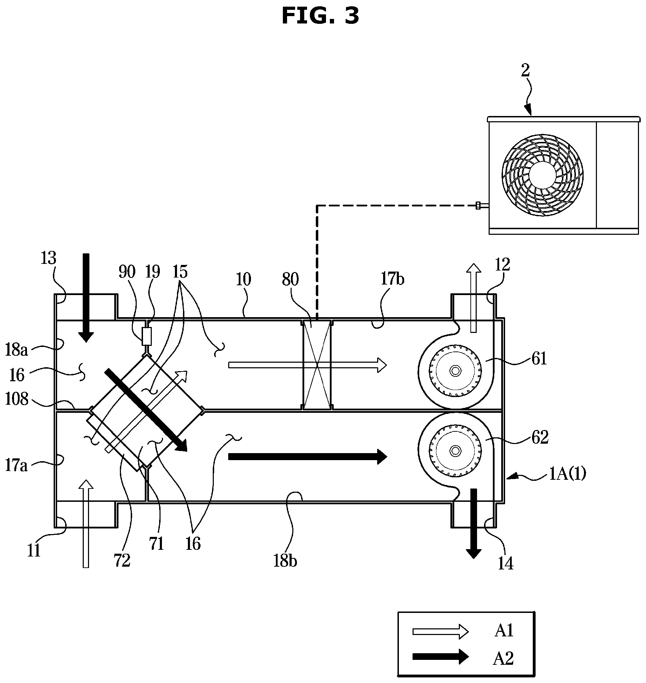

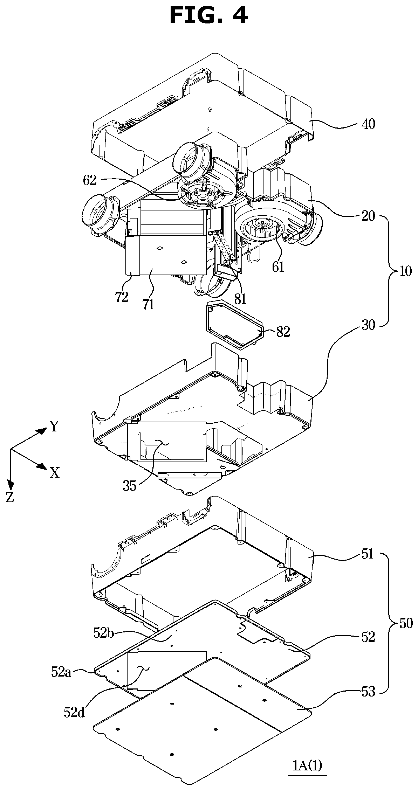

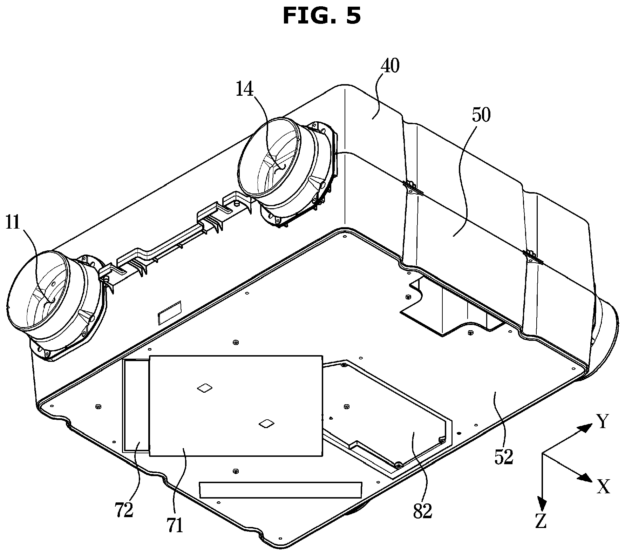

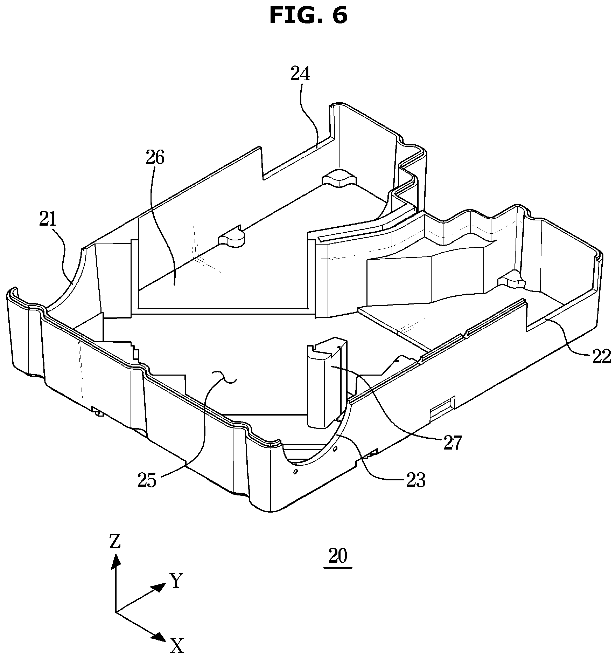

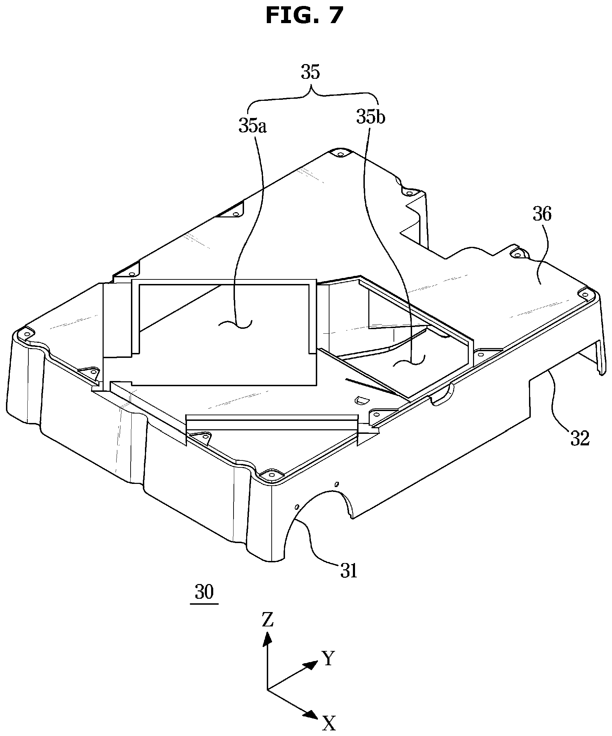

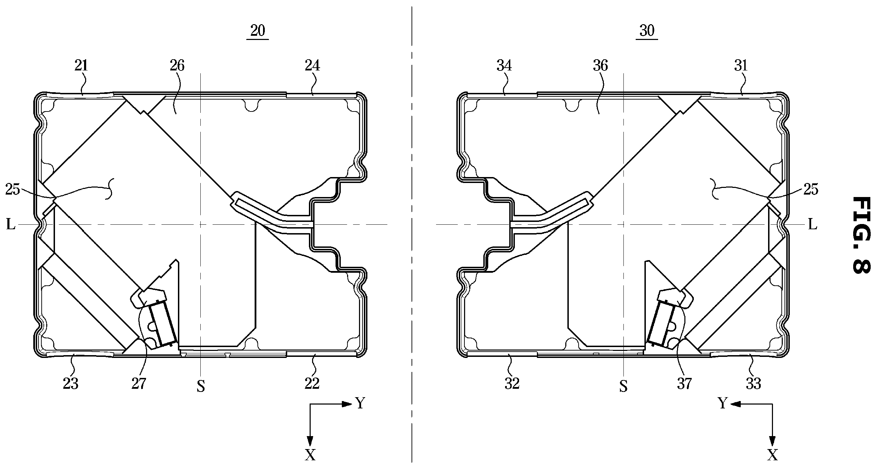

FIG. 1 is a view illustrating a ventilation system including a pair of ventilation apparatuses according to an embodiment of the present invention, according to an embodiment of the present invention, FIG. 2 is a view illustrating a ventilation apparatus shown in FIG. 1, in a state in which some components of a first type-ventilation apparatus are removed, from the top to the bottom, FIG. 3 is a view schematically illustrating an air flow of the ventilation system according to an embodiment of the present invention, FIG. 4 is an exploded perspective view illustrating the first type-ventilation apparatus shown in FIG. 1, FIG. 5 is a view illustrating the first type-ventilation apparatus shown in FIG. 1, in a state in which some components of the ventilation apparatus are removed, from the bottom to the top, FIG. 6 is a perspective view illustrating a second housing of the first type-ventilation apparatus shown in FIG. 1, FIG. 7 is a perspective view illustrating a first housing of the first type-ventilation apparatus shown in FIG. 1, and FIG. 8 is a view illustrating a state in which an upper housing and a lower housing of the first type-ventilation apparatus shown in FIG. 1 are arranged in the left and right direction.

Referring to FIGS. 1 to 8, a ventilation system may include a ventilation apparatus 1 provided to communicate with an indoor space I and an outdoor space O and configured to exchange indoor air with outdoor air, and an outdoor unit 2 configured to circulate a refrigerant supplied to the ventilation apparatus 1.

In the disclosure, all drawings schematically and exemplarily show the configuration of the outdoor unit 2 at a practicable level. The outdoor unit 2 corresponds to an outdoor unit for an air conditioner commonly known in the art, and thus a person skilled in the art can easily change or easily add various configurations necessary for the implementation of the outdoor unit 2. The outdoor unit 2 may be provided at a technical level that is understood by those skilled in the art based on the contents of the disclosure.

A conventional ventilation system does not include the outdoor unit 2, and the conventional ventilation system is configured to perform heat-exchange between air, which is introduced from the outdoor space O to the indoor space I, and air, which is discharged from the indoor space I to the outdoor space O, by using a total heat-exchanger 71 arranged in the ventilation apparatus 1, and configured to circulate air between the indoor space I and the outdoor space O by the ventilation apparatus 1.

However, the ventilation system according to an embodiment of the present invention includes the outdoor unit 2 and the ventilation apparatus 1 includes a heat exchanger 81 connected to the outdoor unit 2. Accordingly, the ventilation system may be configured to exchange heat between air, which is introduced from the outdoor space O to the indoor space I, and air, which is discharged from the indoor space I to the outdoor space O, and additionally configured to dehumidify air supplied to the indoor space I. This will be described later in detail.

The ventilation apparatus 1 includes a housing 10 forming an exterior. The housing 10 may be provided in a substantially box shape. The housing 10 may include an inlet flow path 15 provided to suck outdoor air into the indoor space and an outlet flow path 16 provided to discharge indoor air to the outdoor space. The inlet flow path 15 and the outlet flow path 16 may be partitioned from each other by the housing 10.

The housing 10 includes a first inlet chamber 17a provided with a first inlet 11 provided to communicate with the outdoor space O to allow outdoor air A1 to flow into the housing 10 and provided with the inlet flow path 15 arranged therein, and a second inlet chamber 17b provided with a first outlet 12 provided to communicate with the indoor space I to allow the outdoor air A1, which is sucked into the housing 10, to be discharged into the indoor space I, and provided with the inlet flow path 15 arranged therein. The inlet flow path 15 may connect the first inlet 11 to the first outlet 12.

The housing 10 includes a first outlet chamber 18a provided with a second inlet 13 provided to communicate with the indoor space I to allow indoor air A2 to flow into the housing 10 and provided with the outlet flow path 16 arranged therein, and a second outlet chamber 18b provided with a second outlet 14 provided to communicate with the outdoor space O to allow the indoor air A2, which is sucked into the housing 10, to be discharged into the outdoor space, and provided with the outlet flow path 16 arranged therein. The outlet flow path 16 may connect the second inlet 13 to the second outlet 14.

The ventilation apparatus 1 may include a first blower 61 arranged inside the second inlet chamber 17b and configured to generate a blowing force for sucking the outdoor air A1 into the indoor space, and provided to communicate with the first outlet 12. The ventilation apparatus 1 may include a second blower 62 arranged inside the second outlet chamber 18b and configured to generate a blowing force for discharging the indoor air A2 into the outdoor space, and provided to communicate with the second outlet 14.

The ventilation apparatus 1 includes the total enthalpy heat exchanger 71 in which the air flowing through the outlet flow path 16 and the air flowing through the inlet flow path 15 exchange heat with each other. The total enthalpy heat exchanger 71 may correspond to a plate total enthalpy heat exchanger or a rotary total enthalpy heat exchanger. The total enthalpy heat exchanger 71 may be arranged on a point where the inlet flow path 15 and the outlet flow path 16 intersect. That is, it can be said that the total enthalpy heat exchanger 71 is arranged on the inlet flow path 15 and at the same time arranged on the outlet flow path 16.

The total enthalpy heat exchanger 71 allows the first inlet chamber 17a to communicate with the second inlet chamber 17b. The total enthalpy heat exchanger 71 allows the first outlet chamber 18a to communicate with the second outlet chamber 18b.

The ventilation apparatus 1 may include a filter 72 provided to remove foreign substances flowing on the outdoor air A1.

The filter 72 may be provided to collect foreign substances of a predetermined size. The filter 72 may be a High Efficiency Particulate Air (HEPA) filter provided to collect fine dust of a predetermined size. The HEPA filter may be formed of glass fibers. However, the disclosure is not limited thereto, and the filter 72 may be provided with various types of filters provided to collect foreign substances.

In addition, the filter 72 is not limited thereto and may be provided as a photocatalytic filter that induces chemical action of air using a photocatalyst. That is, the filter 72 may include a photocatalyst and induce a chemical reaction by the light energy of the photocatalyst, thereby sterilizing various pathogens and bacteria present in the air. Acceleration of chemical action may cause decomposition, removal or capture of odor particles in the air.

In addition, although not shown in the drawings, a pre-filter for collecting foreign substances of a predetermined size or larger in the air may be additionally provided.

The filter 72 may be arranged adjacent to the total enthalpy heat exchanger 71. Particularly, the total enthalpy heat exchanger 71 may include an intake end 71a through which the outdoor air A1 on the inlet flow path 15 flows, and the filter 72 may be arranged to face the intake end 71a of the total enthalpy heat exchanger 71.

It is appropriate that the filter 72 is arranged to closely face the intake end 71a. Accordingly, foreign substances flowing in the outdoor air A1 introduced through the first inlet 11 are collected by the filter 72 before the outdoor air A1 flows into the total enthalpy heat exchanger 71, and it is possible to prevent contamination of the total enthalpy heat exchanger 71.

The ventilation apparatus 1 may include a dehumidifying unit 80 configured to adjust a humidity of the air flowing through the inlet flow path 15.

The dehumidifying unit 80 may control the humidity of the outdoor air A1 flowing through the inlet flow path 15, and may additionally control the temperature.

The dehumidifying unit 80 may include a heat exchanger 81 provided to exchange heat with the outdoor air A1 flowing in the inlet flow path 15 and a drain tray 82 provided to collect condensed water generated by the heat exchanger 81.

The heat exchanger 81 may be provided as a pair of heat exchangers. The pair of heat exchangers 81 may exchange heat with the outdoor air A1, respectively. The pair of heat exchangers 81 may be driven in a mode in which all of the heat exchangers operate as evaporators, or in a mode in which one heat exchanger operates as an evaporator and the other heat exchanger operates as a condenser.

As described above, the heat exchanger 81 may be driven in various modes to selectively dehumidify the outdoor air A1 while maintaining the temperature of the outdoor air A1 or while cooling the outdoor air A1.

However, the present invention is not limited thereto, and the heat exchanger 81 may be provided as a single heat exchanger to mainly dehumidify the outdoor air A1.

The dehumidifying unit 80 may be arranged on the inlet flow path 15. The dehumidifying unit 80 may be arranged inside the second inlet chamber 17b. That is, the dehumidifying unit 80 may be arranged on a downstream side of the inlet flow path 15 than the total enthalpy heat exchanger 71.

The housing 10 includes a first housing 30 and a second housing 20 provided to be coupled to the first housing 30 in the up and down direction Z.

The ventilation apparatus 1 may include covers 40 and 50 provided to cover the housing 10. The covers 40 and 50 may be provided to form the exterior of the ventilation apparatus 1.

The covers 40 and 50 may include a first cover 50 arranged on the lower side in the up and down direction Z, and a second cover 40 arranged above the first cover 50 in the up and down direction Z and coupled to the first cover 50 in the up and down direction Z.

The housing 10 may be formed of an insulating material. It is appropriate that the housing 10 is formed of an EPS insulating material such as Styrofoam. However, the disclosure is not limited thereto, and the housing 10 may be formed of various insulating materials provided to maintain the temperature of the air flowing through the inlet flow path 15 and the outlet flow path 16 at a predetermined temperature.

The covers 40 and 50 may be provided to cover the housing 10 formed of an insulating material to protect the housing 10 from the outside. The covers 40 and 50 may be formed of an injection product such as plastic.

According to an embodiment of the present invention, the components are named as the housing 10 and the covers 40 and 50, but the housing 10 may be named as the insulator 10 and the covers 40 and 50 may be named as the housings 40 and 50. However, hereinafter the housing 10 and the covers 40 and 50 will be described with the above-described component names.

The ventilation apparatus 1 of the ventilation system may be arranged in the indoor space I to ventilate the indoor space I by introducing the outside air A1 into the indoor space I and discharging the indoor air A2 to the outside space O. The ventilation apparatus 1 may circulate the indoor air A2.

When the ventilation apparatus 1 is installed in the indoor space I such as multi -plex housing or apartment, the indoor space I may be provided as a pair of indoor spaces I1 and I2 provided symmetrically, as shown in FIG. 1.

The pair of indoor spaces I1 and I2 may be formed mirror-symmetrically in the left and right direction Y based on the direction in which the outdoor air A1 is discharged into the indoor space I.

Accordingly, air conditioning equipment formed on each of the indoor spaces I1 and I2 may also be provided to be formed symmetrically in the left and right direction Y.

That is, the ventilation apparatus 1 may be arranged in the indoor space I, and pipes P1 and P2 formed in the indoor space I may be provided to be connected to the first outlet 12 and the second inlet 13 of the ventilation apparatus 1. Each pipe P1 and P2 may extend to each region Ia, Ib, Ic, and Id of the indoor space I so as to allow each region Ia, Ib, Ic, and Id to be ventilated.

A structure of the pipes P1 and P2 arranged in the indoor spaces I1 and I2 may also be provided to be formed symmetrically in the left and right direction Y.

When the ventilation apparatus 1 in the same shape is arranged in each of the indoor spaces I1 and I2, the first and second inlets 11 and 13 and the first and second outlets 12 and 14 may be arranged to be opposite to each other in the left and right direction Y, and thus it may be difficult to install the ventilation apparatus 1 to the indoor spaces I1 and I2.

Accordingly, as for the conventional ventilation apparatus, upper and lower surfaces of the housing are turned over in the left and right direction Y and installed in the pair of indoor spaces I1 and I2, respectively.

However, the ventilation apparatus 1 according to an embodiment of the present invention may include the dehumidifying unit 80 for dehumidifying the indoor space I as well as for simple ventilating the indoor space I as described above. A user needs to periodically draw out the drain tray 82, which is provided to collect the condensed water generated by the dehumidifying unit 80, from the ventilation apparatus 1 and clean the drain tray 82.

In addition, the user needs to draw out the total enthalpy heat exchanger 71 and the filter 72 from the ventilation apparatus 1 to periodically remove the foreign substances collected in the total enthalpy heat exchanger 71 and the filter 72.

As for the ventilation apparatus 1, a draw-out hole provided to allow the drain tray 82, the total enthalpy heat exchanger 71, and the filter 72 to be drawn out may be provided in the housing 10 and the covers 40 and 50, respectively. Accordingly, the drain tray 82, the total enthalpy heat exchanger 71, and the filter 72 may be drawn out through the draw-out hole.

When the ventilation apparatus 1 is simply installed with the upper and lower surfaces of the housing turned over in the left and right direction Y, it may be difficult to draw out the drain tray 82, the total enthalpy heat exchanger 71, and the filter 72.

That is, when the ventilation apparatus 1 is turned over in the left and right direction Y, a position of the drain tray 82, the total enthalpy heat exchanger 71, and the filter 72 may be inverted in the up and down direction Z, and thus the position thereof may not correspond to a position of the draw-out hole formed in the ventilation apparatus 1 with respect to the up and down direction Z. Accordingly, the drain tray 82, the total enthalpy heat exchanger 71, and the filter 72 may not be drawn out.

In order to prevent this difficulty, a pair of ventilation apparatus 1 are manufactured in a type corresponding to each of the indoor spaces I1 and I2 or the air conditioning equipment of each of the indoor spaces I1 and I2 is formed differently, which may cause an increase in a manufacturing cost, and a difficulty in that the ventilation apparatus 1 is inefficiently installed in the indoor space I.

The conventional ventilation apparatus does not include the dehumidifying unit 80, and thus the conventional ventilation apparatus is turned in the left and right direction Y and installed regardless of the withdrawal of the drain tray 82.

In addition, the conventional ventilation apparatus may be provided such that the total enthalpy heat exchanger 71 and the filter 72 are drawn out from the ventilation apparatus 1. In the conventional ventilation apparatus, the total enthalpy heat exchanger 71 and the filter 72 are arranged to be symmetrical in the left and right direction Y or the front and rear direction X with respect to one of a long central axis L extending parallel to a long side of the housing 10 and a short central axis S extending parallel to a short side of the housing 10.

However, unlike an embodiment of the invention, the short side of the housing 10 may extend in the left and right direction Y and the long side may extend in the front and rear direction X, and accordingly, a direction in which the long central axis L and the short central axis S extend may be different.

In addition, in order to draw out the total enthalpy heat exchanger 71 and the filter 72 from the ventilation apparatus in both direction in the up and down direction Z, a draw-out hole is formed in the housing 10 and the covers 40 and 50 to correspond to an upper end and a lower end in the up and down direction Z.

Accordingly, even when the ventilation apparatus 1 is turned over in the left and right direction Y and installed, the total enthalpy heat exchanger 71 and the filter 72 may be withdrawn from the ventilation apparatus 1 in any direction in the up and down direction Z through the draw-out hole formed at the upper end or the draw-out hole formed at the lower end.

However, as for the ventilation apparatus 1 according to an embodiment of the present invention, the dehumidifying unit 80 may be arranged inside the housing 10 and thus it is difficult to arrange the dehumidifying unit 80 as well as the total enthalpy heat exchanger 71 and the filter 72 to be symmetrical with respect to one of the central axes L and S.

That is, it is required to arrange the dehumidifying unit 80, the total enthalpy heat exchanger 71 and the filter 72 to the housing 10. Accordingly, when arranging each of components to the left and right direction Y or the front and rear direction X with respect to one of the central axes L and S, the size of the ventilation apparatus 1 may be increased in comparison with the conventional ventilation apparatus, which may cause a difficulty in that it is difficult to install the ventilation apparatus to the indoor space I and a difficulty in that the efficiency is reduced due to an increase in an area of the inlet flow path 15 and the outlet flow path 16 formed therein.

In order to prevent this difficulty, as for the ventilation apparatus 1 according to the present invention, the first housing 30 may form one surface 36 of the housing 10, and include a first hole 35 formed on the one surface 36 to be asymmetrical with respect to a central line L of the one surface 36 extending in a long side direction of the one surface 36 or a central line S of the one surface 36 extending in a short side direction of the one surface 36, and provided to allow the drain tray 82, the total enthalpy heat exchanger 71 and the filter 72 to be drawn out from the outside of the housing 10.

In addition, the second housing 20 may form the other surface 26 of the housing, and include a second hole 36 arranged on the other surface 26 and formed in a shape corresponding to the first hole 35 in the up and down direction Z.

One of the first housing 30 and the second housing 20 may be selectively covered by the first cover 50, and the other one of the first housing 30 and the second housing 20 may be covered by the second cover 40.

That is, the first cover 50 and the second cover 40 may be respectively arranged to fixedly form a lower and an upper portion of the ventilation apparatus 1, and one of the first housing 30 and the second housing 40 may be provided to be selectively inserted into the first cover 30 forming the lower portion of the ventilation apparatus 1 and the other of the first housing 30 and the second housing 40 may be provided to be selectively inserted into the second cover 40.

Accordingly, the first housing 30 may be inserted into the first cover 50 and arranged in the lower portion of the ventilation apparatus 1, and alternatively, the second housing 20 may be inserted into the first cover 50 and arranged in the lower portion of the ventilation apparatus 1.

When it is assumed that a ventilation apparatus 1 arranged on the left side with respect to the left and right direction Y with reference to FIG. 1 is defined as the first type 1A and a ventilation apparatus 1 arranged on the right side with respect to the left and right direction Y is defined as the second type 1B, the ventilation apparatus 1 according to an embodiment of the disclosure may implement the first type-ventilation apparatus 1A and the second type-ventilation apparatus 1B by changing the position of the first housing 30 and the second housing 20 with respect to the up and down direction Z.

In the first type-ventilation apparatus 1A, the first housing 30 may form a lower portion of the housing 10 in the up and down direction Z and be inserted into the first cover 50. Accordingly, the second housing 20 may be provided to be arranged above the first housing 30 with respect to the up and down direction Z.

The internal components of the housing 10 such as the blowers 61 and 62, the dehumidifying unit 80, the total enthalpy heat exchanger 71, and the filter 72 may be mounted based on the internal shape of the first housing 30. As will be described later, the drain tray 82, the total enthalpy heat exchanger 71, and the filter 72 may be arranged to correspond to the first hole 35 of the first housing 30.

In the second type-ventilation apparatus 1B, the second housing 20 may form a lower portion of the housing 10 in the up and down direction Z and be inserted into the first cover 50. Accordingly, the first housing 30 may be provided to be arranged above the second housing 20 with respect to the up and down direction Z.

The internal components of the housing 10 such as the blowers 61 and 62, the dehumidifying unit 80, the total enthalpy heat exchanger 71, and the filter 72 may be mounted based on the internal shape of the second housing 20. As will be described later, the drain tray 82, the total enthalpy heat exchanger 71, and the filter 72 may be arranged to correspond to the second hole 25 of the second housing 20.

That is, by simply changing only the positions of the first and second housings 30 and 20 in the up and down direction Z, the first and second type-ventilation apparatuses 1A and 1B may be formed. Hereinafter it will be described with reference to the first type-ventilation apparatus 1A.

As shown in FIG. 4, the ventilation apparatus 1 may be provided in such a way that the second cover 40 forming the upper portion of the ventilation apparatus 1, the second housing 20 provided to be inserted into the second cover 40, the first housing 30 coupled to the second housing 20 from the lower side with respect to the up and down direction Z, and the first cover 50 forming the lower portion of the ventilation apparatus 1 and provided to cover the first housing 30 are sequentially arranged.

The internal components of the housing 10 such as the blowers 61 and 62, the dehumidifying unit 80, the total enthalpy heat exchanger 71, and the filter 72 may be arranged to be supported by the first housing 30 or the second housing 20. However, the drain tray 82, the total enthalpy heat exchanger 71, and the filter 72 may be supported so as to be withdrawn downward of the ventilation apparatus 1 through the first hole 35 of the first housing 30.

As described above, the first and second housings 30 and 20 may be assembled by changing the position thereof with respect to the up and down direction Z, but the first and second covers 50 and 40 may be arranged at the same position regardless of the type of the ventilation apparatus 1. The second cover 40 may always form the upper portion of the ventilation apparatus 1, and the first cover 50 may always form the lower portion of the ventilation apparatus 1.

The first cover 50 may include a body 51 in a rectangular frame shape, a surface member 52 detachably coupled to the body 51 and formed in a plate shape, and a lower cover 53 formed in a lower portion so as to cover the surface member 52.

Unlike the second cover 40, the first cover 50 may be provided to communicate with the housing 10 to allow the drain tray 82, the total enthalpy heat exchanger 71, and the filter 72 to be drawn out of the ventilation apparatus 1.

Particularly, the surface member 52 may include a third hole 52d provided to correspond to the first hole 35 of the first housing 30.

The surface member 52 may include a plate body 52a, a first surface 52b of the plate body 52a, and a second surface 52c arranged on an opposite side of the first surface 52b.

The third hole 52d may be formed on the plate body 52a. As described above, the third hole 52d may be provided to correspond to the first hole 35 and thus the third hole 52d may be provided to be asymmetrical on the plate body 52a with respect to one of the long central axis L and the short central axis S of the housing 10.

In the first type-ventilation apparatus 1A, the surface member 52 may be coupled to the body 51 to allow the first surface 52b to face downward. In response to the first surface 52b being coupled to the body 51 to allow the first surface 52b to face downward, the third hole 52d may be provided to correspond to the first hole 35 of the first housing 30 in the up and down direction Z.

The first hole 35 and the third hole 52d may include substantially the same shape and may be overlapped in the up and down direction Z.

The surface member 52 may be coupled to the body 51 to allow the second surface 52c to face downward. Because the surface member 52 is turned over, the third hole 52d may be arranged in a shape that is inverted in comparison with the shape in which the surface member 52 is coupled to the body 51 to allow the first surface 52b to face downward. This will be described later in detail.

As shown in FIG. 5, in response to removing the lower cover 53 from the first cover 50, the drain tray 82, the total enthalpy heat exchanger 71, and the filter 72 may be exposed to the outside through the lower side of the ventilation apparatus 1.

The user can draw out the drain tray 82, the total enthalpy heat exchanger 71 and the filter 72 downward from the ventilation apparatus 1 as needed.

The first housing 30 and the second housing 20 may include the identical outer structure, as shown in FIGS. 6 to 8. As described above, the first housing 30 or the second housing 20 is provided to be selectively inserted into the first cover 50, and thus, in order that the housings 20 and 30 is inserted into and supported by the first cover 50, the housings 20 and 30 may include the identical outer shape.

Conversely, the first housing 30 or the second housing 20 is provided to be selectively inserted into the second cover 40, and thus, in order that the housings 20 and 30 are inserted into and supported by the second cover 40, the housings 20 and 30 may include the identical outer shape.

The first housing 30 may include a first inlet forming portion 31 forming a portion of the first inlet 11, a first outlet forming portion 32 forming a portion of the first outlet 12, a second inlet forming portion 33 forming a portion of the second inlet 13, and a second outlet forming portion 34 forming a portion of the second outlet 14.

The first outlet forming portion 32 and the second outlet forming portion 34 may be provided to be symmetrical with respect to the long central axis L. In addition, the first inlet forming portion 31 and the second inlet forming portion 33 may be provided to be symmetrical with respect to the long central axis L.

This is to allow the first housing 30 to maintain the same shape despite of the reverse in the left and right direction Y.

For example, in the first type-ventilation apparatus 1A, the first outlet forming portion 32 may be arranged on the right side of the ventilation apparatus 1 in the left and right direction Y, but in the second type-ventilation apparatus 1B, the first outlet forming portion 32 may be arranged on the left side of the ventilation apparatus 1 in the left and right direction Y.

In the same manner as the first housing 30, the second housing 20 may include a first inlet forming portion 21 forming a portion of the first inlet 11, a first outlet forming portion 22 forming a portion of the first outlet 12, a second inlet forming portion 23 forming a portion of the second inlet 13, and a second outlet forming portion 24 forming a portion of the second outlet 14.

The first outlet forming portion 22 and the second outlet forming portion 24 may be provided to be symmetrical with respect to the long central axis L. In addition, the first inlet forming portion 21 and the second inlet forming portion 23 may be provided to be symmetrical with respect to the long central axis L.

The first outlet forming portion 32 of the first housing 30 and the first outlet forming portion 22 of the second housing 20 may be provided to correspond to each other in the up and down direction Z. The first inlet forming portion 31 of the first housing 30 and the first inlet forming portion 21 of the second housing 20 may be provided to correspond to each other in the up and down direction Z. The second outlet forming portion 34 of the first housing 30 and the second outlet forming portion 24 of the second housing 20 may be provided to correspond to each other in the up and down direction Z. The second inlet forming portion 33 of the first housing 30 and the second inlet forming portion 23 of the second housing 20 may be provided to correspond to each other in the up and down direction Z.

This is to allow first and second outlets 12 and 14 and the first and second inlets 11 and 13 to have the same shape even when the first housing 30 and the second housing 20 are inverted in the up and down direction and assembled.

The first housing 30 and the second housing 20 each may include a partition provided to define the first and second inlet chambers 17a and 17b and the first and second outlet chambers 18a and 18b in the housing 10.

Each partition may be provided in accordance with the up and down direction Z.

As described above, the dehumidifying unit 80 may be arranged in the second inlet chamber 17b. Accordingly, the second inlet chamber 17b may be provided to have a larger area than the first inlet chamber 17a and the first and second outlet chambers 18a and 18b.

The first and second inlet chambers 17a and 17b and the first and second outlet chambers 18a and 18b may be formed as a space formed by the one surface 36 of the housing 10 formed on the first housing 30 and the other surface 26 of the housing 10 formed on the second housing 20, and the partition of the first and second housings 20 and 30. The first and second inlet chambers 17a and 17b and the first and second outlet chambers 18a and 18b may communicate with each other by the total enthalpy heat exchanger 71.

The total enthalpy heat exchanger 71 may be provided in a square shape. This is to provide the same amount of heat exchange between the outdoor air A1 and the indoor air A2 flowing in the total enthalpy heat exchanger 71.

The first hole 35 through which the heat exchanger 71, the filter 72, and the drain tray 82 are drawn out may be divided into a first region 35a through which the heat exchanger 71 and the filter 72 are drawn out, and a second region 35b through which the drain tray 82 is drawn out.

According to an embodiment of the present invention, the first region 35a and the second region 35b may be provided in a shape connected to each other, but the disclosure is not limited thereto. Alternatively, the first region 35a and the second region 35b may be separated from each other.

The first region 35a may have a substantially rectangular shape. This is because, as described above, the total enthalpy heat exchanger 71 is provided to have a square cross section, and the filter 72 is arranged adjacent to the intake end 71a of the total enthalpy heat exchanger 71.

Therefore, in order to expose both the total enthalpy heat exchanger 71 and the filter 72 to the outside, the first region 35a may be provided in a rectangular shape.

The second region 35b may be provided in a shape corresponding to a cross-section of the drain tray 82. A shape of the cross-section of the second region 35b is not limited to one shape and may be formed in various shapes.

When it is assumed that, with respect to the front and rear direction X, a side on which the first inlet 11 and the second outlet 14 are arranged is defined as one side, and a side on which the second inlet 13 and the first outlet 12 are arranged is defined as the other side, the total enthalpy heat exchanger 71 may be arranged adjacent to the one side of the housing 10 with respect to the long central axis L. Particularly, the total enthalpy heat exchanger 71 may be arranged closest to the first inlet 11.

This is to maximize the area of the second inlet chamber 17b in the limited internal space of the housing 10 because it is required to arrange the dehumidifying unit 80 to be adjacent to the first outlet 12.

Accordingly, in the first housing 30, the first region 35a of the first hole 35 may be arranged most adjacent to the first outlet forming portion 32 of the first housing 30 with respect to the long central axis L, so as to correspond to the total enthalpy heat exchanger 71.

Accordingly, the first hole 35 may be formed asymmetrically at the center with respect to the long central axis L or the short central axis S on the one surface 36 of the first housing 30.

When the one surface 36 of the first housing 30 and the other surface 26 of the second housing 20 are arranged parallel to the long central axis L or the short central axis S on the same surface, the first hole 35 of the first housing 30 and the second hole 25 of the second housing 20 may be provided mirror-symmetrically with respect to a center line between the first housing 30 and the second housing 20.

Further, the partition of the first housing 30 and the partition of the second housing 20 may also be provided mirror-symmetrically with respect to the center line between the first housing 30 and the second housing 20.

Accordingly, even when the ventilation apparatus 1 is formed such that the first housing 30 and the second housing 20 are inverted in the up and down direction Z, the first type-ventilation apparatus 1A and the second type-ventilation apparatus 1B may be arranged symmetrically in the left and right direction Y.

Hereinafter the second type-ventilation apparatus 1B will be described.

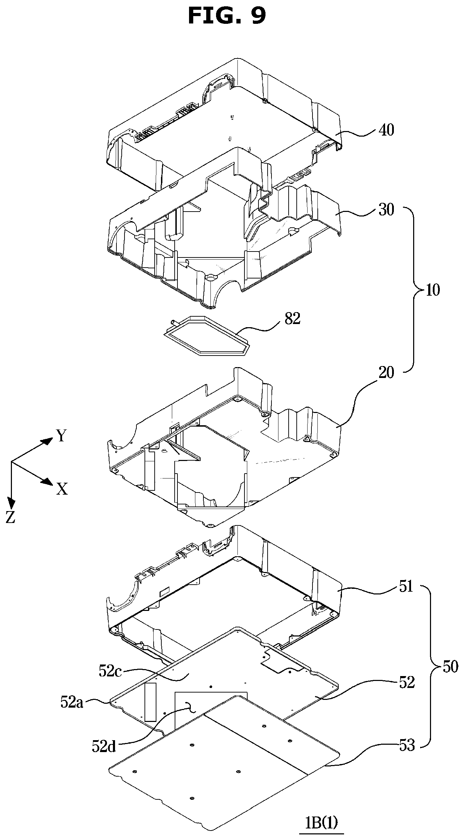

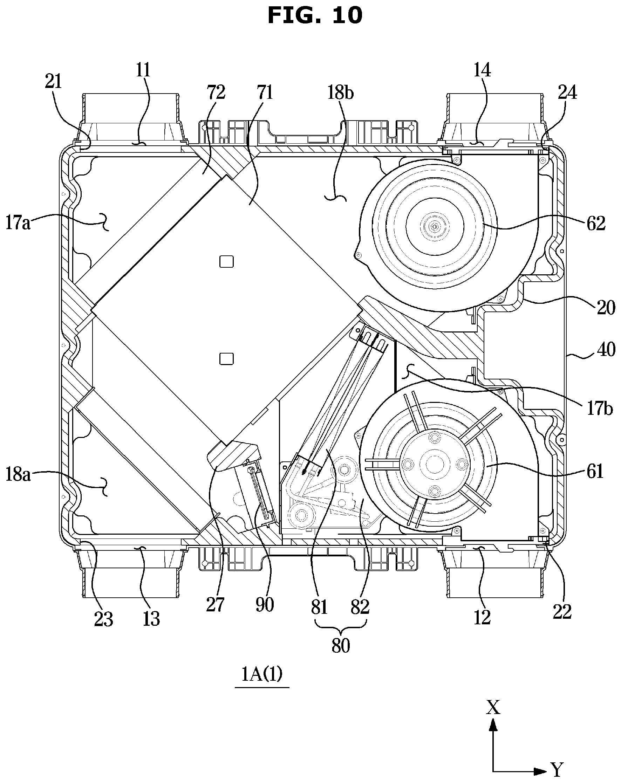

FIG. 9 is an exploded perspective view illustrating a second type-ventilation apparatus shown in FIG. 1, and FIG. 10 is a view illustrating the ventilation apparatus shown in FIG. 1, in a state in which some components of the second type-ventilation apparatus are removed, from the top to the bottom.

In the second type-ventilation apparatus 1B, the first housing 30 may be arranged on the upper side and the second housing 20 may be arranged on the lower side in the up and down direction Z, as illustrated in FIGS. 9 and 10.

The first housing 30 may be provided to be inserted into the second cover 40, and the second housing 20 may be provided to be inserted into the first cover 50.

The internal components of the housing 10 such as the dehumidifying unit 80, the total enthalpy heat exchanger 71, and the filter 72 may be arranged inside the housing 10 that is inverted with respect to the up and down direction Z in comparison with the first type-ventilation apparatus 1A.

That is, the blowers 61 and 62, the total enthalpy heat exchanger 71, and the filter 72 accommodated inside the second type-ventilation apparatus 1B based on the front and rear direction X of the first type-ventilation apparatus 1A may be mounted to the housing 10 to be switched with respect to the front and rear direction X.

However, when the second type-ventilation apparatus 1B is installed in the indoor space I2, the first outlet 12 may be directed forward with respect to the front and rear direction X of the first type-ventilation apparatus 1A, and thus the first and second type-ventilation apparatuses 1A and 1B may be installed in the indoor space I so as to be symmetrical only in the left and right direction Y, respectively.

The drain tray 82, the total enthalpy heat exchanger 71, and the filter 72 may be provided to be drawn out of the ventilation apparatus 1 through the second hole 25 of the second housing 20.

The third hole 52d of the surface member 52 of the second cover 50 may be coupled to the body 51 to correspond to the second hole 25.

In the second type-ventilation apparatus 1B, the surface member 52 may be coupled to the body 51 to allow the second surface 52c to face downward. In response to being coupled to the body 51 to allow the second surface 52c to face downward, the third hole 52d may be provided to correspond to the second hole 25 of the second housing 20 in the up and down direction Z.

The second hole 25 and the third hole 52d may have substantially the same shape and may be overlapped in the up and down direction Z.

That is, when the first and second housings 30 and 20 are inverted in the up and down direction Z, the first surface 52b and the second surface 52c may be inverted in the same manner and then coupled to the body 51.

Accordingly, even when the first and second housings 30 and 20 are inverted to form any one of the first and second type-ventilation apparatuses 1A and 1B, the first cover 50 may arrange the third hole 52d to a position overlapped with the first and second holes 35 and 25 with respect to the up and down direction Z.

Hereinafter an operation of the ventilation apparatus 1 according to an embodiment of the present invention will be described.

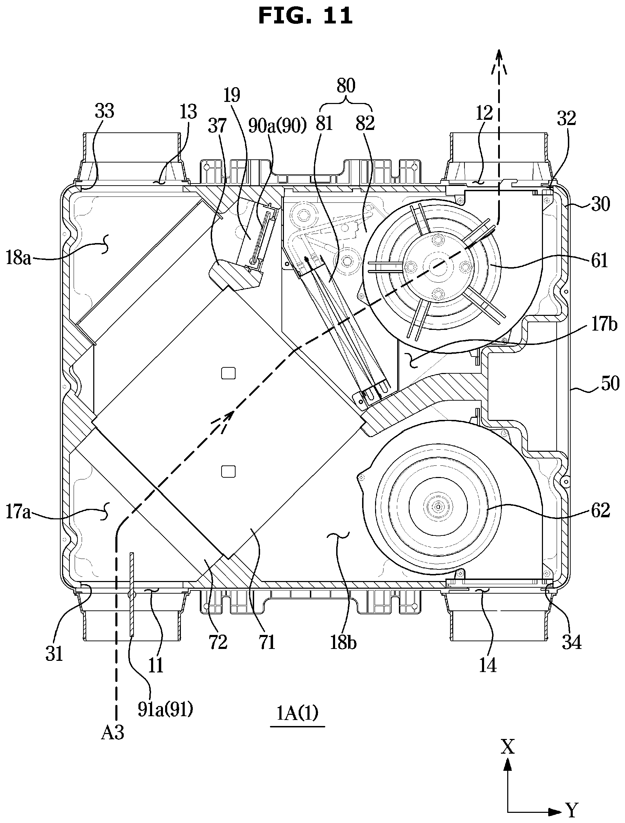

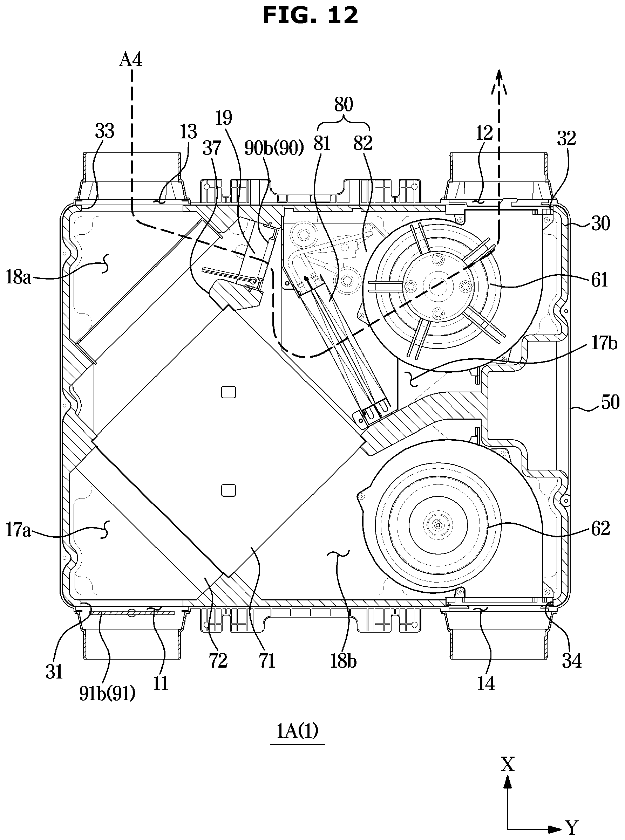

FIG. 11 is a view schematically illustrating an air flow of the first type-ventilation apparatus shown in FIG. 1, and FIG. 12 is a view schematically illustrating an air flow in a mode different from the air flow, shown in FIG. 11, of the first type-ventilation apparatus shown in FIG. 1.

As illustrated in FIGS. 11 and 12, the housing 10 may include a connection flow path 19 connecting at least a portion of the inlet flow path 15 to the outlet flow path 16.

Particularly, the connection flow path 19 may be arranged between the first outlet chamber 18a and the second inlet chamber 17b and arranged on a partition wall defining the first outlet chamber 18a and the second inlet chamber 17b (refer to FIG. 3).

The partition wall may be formed by a partition wall forming member 37 of the first housing 30 and a partition wall forming member 27 of the second housing 20. The connection flow path 19 may be formed by cutting at least a portion of the partition wall.

Accordingly, the first outlet chamber 18a and the second inlet chamber 17b may communicate with each other.

The ventilation apparatus 1 may include a connection path opening and closing unit 90 arranged on the connection flow path 19 and configured to open and close the connection flow path 19.

The connection path opening and closing unit 90 may selectively open and close the connection flow path 19 to allow the first outlet chamber 18a and the second inlet chamber 17b to selectively communicate with each other.

The connection path opening and closing unit 90 may be provided in any configuration, such as a valve or a damper, configured to selectively open and close the connection flow path 19 by being controlled by a controller (not shown) to be described later.

The ventilation apparatus 1 may include a first inlet opening and closing unit 91 arranged on the first inlet 11 and configured to selectively open and close the first inlet 11.

The ventilation apparatus 1 may include a controller (not shown) configured to control the ventilation apparatus 1 based on an indoor temperature and/or indoor humidity and/or discharge temperature, and configured to control an operation mode of the ventilation apparatus 1 according to a user's selection.

In a wireless or wired manner, the controller (not shown) may be electrically connected to a temperature sensor configured to measure a temperature of the indoor space I and the outdoor space O and a discharge temperature sensor (not shown) configured to measure a temperature of air discharged from the ventilation apparatus 1, thereby receiving a value that is measured by the sensors.

The ventilation apparatus 1 may be operated in an outdoor dehumidification mode and an indoor dehumidification mode. The outdoor dehumidification mode may additionally be divided into a cooling dehumidification mode and a reheat dehumidification mode. The ventilation apparatus 1 including the dehumidifying unit 80 may be driven in an operation mode automatically selected by a controller (not shown) based on the values measured by each sensor, or in an operation mode selected by the user's selection.

The above-described heat exchanger 81 may be provided in plurality. All of the plurality of heat exchangers may operate as evaporators through the controller (not shown), and at least one of the plurality of heat exchangers may operate as a condenser, and the other heat exchanger may operate as an evaporator.

In the cooling dehumidification mode, an amount of refrigerant delivered to the dehumidifying unit 80 may be adjusted or the plurality of heat exchangers 81 of the dehumidifying unit 80 may operate as evaporators to absorb heat while removing moisture in the air introduced from the outdoor space O. Accordingly, it is possible to provide cooled air to the indoor space I.

In the reheat dehumidification mode, one heat exchanger among the plurality of heat exchangers 81 may operate as a condenser and the other heat exchanger may operate as an evaporator so as to remove moisture in the air introduced from the outdoor space O while maintain the temperature of the air introduced into the ventilation apparatus 1. Accordingly, it is possible to provide cooled air to the indoor space I.

In the outdoor dehumidification mode, as shown in FIG. 11, outside air A3 introduced into the ventilation apparatus 1 through the first inlet 11 may be heat exchanged through the total enthalpy heat exchanger 71 and dehumidified through the dehumidifying unit 80, and then provided to the indoor space I through the first outlet 12.

In this case, the connection path opening and closing unit 90 may be provided in a closed state 90a to prevent the air, which is introduced from the indoor space, from being mixed with the outside air A3.

Further, the first inlet opening and closing unit 91 may be provided in an open state 91a to allow the outside air A3 to flow into the ventilation apparatus 1.

The indoor dehumidification mode may remove moisture in the air introduced from the indoor space I while circulating the air in the indoor space I through the ventilation apparatus 1, thereby supplying the cooled air back to the indoor space I.

As described above, in the outdoor dehumidification mode, when outdoor air flows into the ventilation apparatus 1, the outdoor air may pass through the filter 72, the total enthalpy heat exchanger 71 and the dehumidifying unit 80 arranged inside the ventilation apparatus 1 and then discharged to the indoor space I through the first outlet 12.

In this case, as an amount of air introduced into the ventilation apparatus 1 increases, an amount of foreign substances collected in the filter 72 may increase, and an amount of foreign substances accumulated in the total enthalpy heat exchanger 71 may increase.

Accordingly, the user can periodically draw out the filter 72 and the total enthalpy heat exchanger 71 from the ventilation apparatus 1 through the first hole 35 to clean the filter 72 and the total enthalpy heat exchanger 71, and then insert the filter 72 and the total enthalpy heat exchanger 71 that are cleaned into the ventilation apparatus 1.

That is, as the amount of air passing through the filter 72 and the total enthalpy heat exchanger 71 increases, the user needs to draw out the filter 72 and the total enthalpy heat exchanger 71 from the ventilation apparatus 1 and insert the filter 72 and the total enthalpy heat exchanger 71 to the ventilation apparatus 1 in a shorter cycle. Accordingly, in the use of the ventilation apparatus 1, user inconvenience may occur.

To ease the difficulty, the ventilation apparatus 1 according to an embodiment of the present invention may reduce the amount of air passing through the filter 72 and the total enthalpy heat exchanger 71 through the indoor dehumidification mode so as to increase a duration, in which the filter 72 and the total enthalpy heat exchanger 71 are contaminated, thereby increasing a cleaning cycle of the filter 72 and the total enthalpy heat exchanger 71.

Particularly, in the indoor dehumidification mode, the ventilation apparatus 1 may prevent the air, which is moved in the indoor space and then introduced into the ventilation apparatus 1 through the second inlet 13, from flowing into the second outlet 14, so as to circulate the air from the inside of the ventilation apparatus 1 to the indoor space through the first outlet 12 again without discharging the indoor air to the outside.

In this case, the ventilation apparatus 1 may be provided to allow the air, which is circulated inside the ventilation apparatus 1, to pass through the dehumidifying unit 80, and thus even when the indoor air is circulated, the ventilation apparatus 1 may dehumidify the air.

Accordingly, in the indoor dehumidification mode, the outdoor air may not be introduced into the ventilation apparatus 1 and thus it is possible to dehumidify the indoor air, which is circulated, while preventing the filter 72 and the total enthalpy heat exchanger 71 from being contaminated by the foreign substances that are introduced from the outside.

In addition, the indoor air may pass through the filter 72 when being introduced from the outside, and thus the indoor air may be already maintained in a clean state. Accordingly, in the circulation of the indoor air, the cleanliness of the indoor air may be maintained. In the indoor dehumidification mode, as shown in FIG. 12, inside air A4, which is introduced into the ventilation apparatus 1 through the second inlet 13, may not flow into the second outlet 14 through the total enthalpy heat exchanger 71 but flow into the second inlet chamber 17b through the connection flow path 19 and pass through the dehumidifying unit 80 and then be circulated into the indoor space I through the first outlet 12. In this case, the connection path opening and closing unit 90 may be provided in an open state 90b to allow the indoor air A4, which is introduced from the indoor space, to flow to the connection flow path 19.

In addition, the first inlet opening and closing unit 91 may be provided in a closed state 91b to prevent outside air from being introduced into the ventilation apparatus 1 and mixed with the indoor air A4.

It is appropriate that the second blower 62 is not driven in the indoor dehumidification mode. This is to prevent that at least a portion of the air introduced into the second inlet 13 does not flow to the connection flow path 19 but flows to the second outlet 14 through the total enthalpy heat exchanger 71 when the second blower 62 is driven.

In response to the indoor dehumidification mode of the ventilation apparatus 1, the controller (not shown) may control the first inlet opening and closing unit 91 to be the closed state 91b while stopping the driving of the second blower 62, and control the connection path opening and closing unit 90 to open the connection flow path 19.

Accordingly, in the indoor dehumidification mode, the ventilation apparatus 1 may allow the indoor air, which is introduced into the ventilation apparatus 1, to pass through the dehumidifying unit 80 without passing through the filter 72 and the total enthalpy heat exchanger 71, and thus the ventilation apparatus 1 may supply the dehumidified air to the indoor space while preventing the contamination of the filter 72 and the total enthalpy heat exchanger 71 caused by the outside air.

In response to a user input or values transmitted from various sensors, the controller (not shown) may control the ventilation apparatus 1 to be driven in the outdoor dehumidification mode. In this case, the controller (not shown) may control the first blower 61 and the second blower 62, respectively, to allow both the first blower 61 and the second blower 62 to be driven. In addition, the controller (not shown) may control the connection path opening and closing unit 90 to maintain the closed state 90a of the connection path opening and closing unit 90.

In response to a user input or values transmitted from various sensors, the controller (not shown) may control the ventilation apparatus 1 to be driven in the indoor dehumidification mode. In this case, the controller (not shown) may control the first blower 61 and the second blower 62, respectively, to allow the first blower 61 to be driven and to allow the second blower 62 not to be driven. In addition, the controller (not shown) may control the connection path opening and closing unit 90 to be the open state 90b. Further, the controller (not shown) may control the first inlet opening and closing unit 91 to be the closed state 91b.

The ventilation apparatus 1 may be driven in either the outdoor dehumidification mode in which the outside air A3 flows into the indoor space I or the indoor dehumidification mode in which the indoor air A4 circulates into the indoor space I.

In any operation mode, the ventilation apparatus 1 may provide dehumidified air to the indoor space I.

Hereinafter a ventilation apparatus 1' according to another embodiment of the present invention will be described in detail.

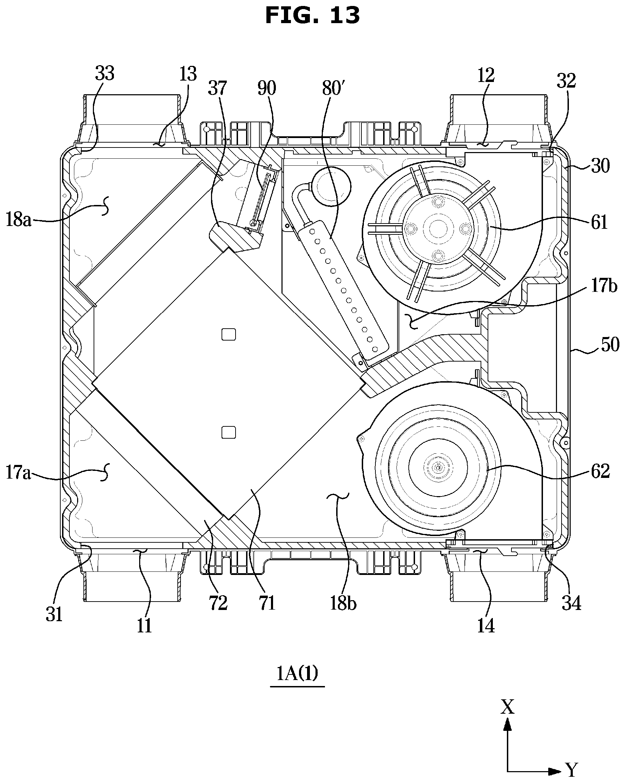

FIG. 13 is a view illustrating a ventilation apparatus according to another embodiment of the present invention, in a state in which some components of a first type-ventilation apparatus are removed, from the top to the bottom.

The ventilation apparatus 1' may include a humidifying unit 80' detachably arranged on the inlet flow path 15 and configured to supply moisture to the air flowing through the inlet flow path 15.

The humidifying unit 80' may be provided to be detachable from the ventilation apparatus 1', and the humidifying unit 80' and the dehumidifying unit 80 may be selectively arranged on the inlet flow path 15.

The dehumidifying unit 80 may be provided to be detachable from the ventilation apparatus 1'. Like the ventilation apparatus 1 according to an embodiment of the disclosure, only the drain tray 82 may be drawn out from the ventilation apparatus 1'. However, the entire dehumidifying unit 80 including the heat exchanger 81 may be drawn out from the ventilation apparatus 1'.

The dehumidifying unit 80 and the humidifying unit 80' may be similarly provided to be drawn out and inserted through the first hole 35 based on the first type-ventilation apparatus 1'.

The humidifying unit 80' may be arranged at a position from which the dehumidifying unit 80 is drawn out. The humidifying unit 80' may include a plurality of nozzles provided to supply moisture to the air and a storage provided to store water.

Accordingly, moisture may be supplied to the air flowing through the inlet flow path 15 and thus air containing a predetermined level of moisture may be discharged into the indoor space I.

That is, according to the environment of the indoor space I, the user selectively combines the dehumidifying unit 80 or the humidifying unit 80' with the ventilation apparatus 1' and the ventilation apparatus 1' may supply air suitable for the environment of the indoor space I.

Although a few embodiments of the present invention have been shown and described, it would be appreciated by those skilled in the art that changes may be made in these embodiments without departing from the scope of the present invention, which is defined in the claims.

## Claims

1. A ventilation apparatus (1) comprising:
a housing (10) including
an inlet flow path (15) provided to guide outdoor air, introduced through a first inlet (11), to flow to an indoor space (I) through a first outlet (12),
an outlet flow path (16) provided to guide indoor air, introduced through a second inlet (13), to flow to an outdoor space (O) through a second outlet (14),
a connection flow path (19) provided to connect the inlet flow path (15) to the outlet flow path (16), and
a connection path opening and closing unit (90) configured to selectively open and close the connection flow path (19);
a total enthalpy heat exchanger (71) provided to exchange heat with air flowing along the inlet flow path (15) and air flowing along the outlet flow path (16) with each other;
a heat exchanger (81) configured to remove moisture in the air flowing along the inlet flow path (15),
wherein the connection flow path (19) is provided to allow the indoor air, introduced through the second inlet (13), to pass through the heat exchanger (81) and flow to the first outlet (12) while preventing the indoor air from flowing to the total enthalpy heat exchanger (71), and
wherein the housing (10) further comprises:
a first inlet chamber (17a) forming a portion of the inlet flow path and positioned between the first inlet and the total enthalpy heat exchanger;
a second inlet chamber (17b) forming another portion of the inlet flow path and positioned between the first outlet and the total enthalpy heat exchanger;
a first outlet chamber (18a) forming a portion of the outlet flow path and positioned between the second inlet and the total enthalpy heat exchanger;
a second outlet chamber (18b) forming another portion of the outlet flow path and positioned between the second outlet and the total enthalpy heat exchanger;
a first housing (30) comprising a first hole (35) provided to allow the total enthalpy heat exchanger (71) to be drawn out to an outside of the housing; and
a second housing (20) couplable to the first housing in an up and down direction, and comprising a second hole (25) arranged on another surface of the housing and formed in a shape corresponding to the first hole in the up and down direction,
wherein the ventilation apparatus (1) further comprises a drain tray (82) provided to collect condensed water generated by the heat exchanger (81),
wherein the heat exchanger (81) is arranged in the second inlet chamber (17b),
wherein the connection flow path (19) is provided to connect the first outlet chamber (18a) to the second inlet chamber (17b), and
wherein the first hole (35) is formed asymmetrically on a surface with respect to a center line of the one surface extending along a long axis direction or a short axis direction of the surface of the housing (10), and provided to allow the drain tray (82) to be drawn out to an outside of the housing (10).

2. The ventilation apparatus of claim 1, further comprising:
a filter (72) provided to collect foreign substances in the outdoor air introduced through the first inlet, and arranged to face an intake end of the total enthalpy heat exchanger.

3. The ventilation apparatus of claim 2, wherein
the connection flow path provided to allow the indoor air, which is introduced through the second inlet, to pass through the heat exchanger and flow to the first outlet while preventing the indoor air from flowing to the total enthalpy heat exchanger and the filter.

4. The ventilation apparatus of claim 1, further comprising:
a first blower (61) provided along the inlet flow path to move the outdoor air; and
a second blower (62) provided along the outlet flow path to move the indoor air,
wherein the first blower is arranged in the second inlet chamber; and the second blower is arranged in the second outlet chamber.

5. The ventilation apparatus of claim 4, wherein
the housing further comprises a first inlet opening and closing unit (91) configured to open and close the first inlet,
wherein the first inlet opening and closing unit closes the first inlet in response to the connection path opening and closing unit opening.

6. The ventilation apparatus of claim 5, wherein
the second blower is not driven in response to the connection path opening and closing unit opening.

7. The ventilation apparatus of claim 1, wherein
at least a portion of the second inlet chamber is formed by the other surface of the housing, and at least a portion of the first outlet chamber is formed by the other surface of the housing,
wherein the housing further comprises a partition wall arranged between the second inlet chamber and the first outlet chamber, and provided to define the second inlet chamber and the first outlet chamber inside the housing,
wherein the connection path opening and closing unit is arranged on the partition wall.

8. The ventilation apparatus of claim 7, wherein
the total enthalpy heat exchanger is arranged adjacent to one side of the housing rather than another side of the housing on a center of the one side and the other side of the housing with respect to a center line extending along a direction in which the one side and the other side of the housing extend.

9. The ventilation apparatus of claim 8, wherein
the first hole comprises a first region (35a) through which the total enthalpy heat exchanger is drawn out; and a second region (35b) through which the drain tray is drawn out,
wherein the first region is arranged adjacent to the one side of the housing rather than the other side of the housing on the center of the one side and the other side of the housing with respect to the center line extending along the direction in which the one side and the other side of the housing extend.

10. The ventilation apparatus of claim 1, wherein
the second inlet chamber provided to have a larger internal space than the first inlet chamber, the first outlet chamber, and the second outlet chamber.

11. The ventilation apparatus of claim 1, wherein the first housing (30) comprises
a first inlet portion (31) forming a portion of the first inlet (11);
a first outlet portion (32) forming a portion of the first outlet (12);
a second inlet portion (33) forming a portion of the second inlet (13); and
a second outlet portion (34) forming a portion of the second outlet (14), and
the second housing (20) comprises
a first inlet portion (21) forming another portion of the first inlet (11);
a first outlet portion (22) forming another portion of the first outlet (12);
a second inlet portion (23) forming another portion of the second inlet (13); and
a second outlet portion (24) forming another portion of the second outlet (14),
wherein the first outlet portion (32) of the first housing and the first outlet portion (22) of the second housing are formed symmetrically along the up and down direction, the first inlet portion of the first housing and the first inlet portion of the second housing are formed symmetrically along the up and down direction, the second outlet portion of the first housing and the second outlet portion of the second housing are formed symmetrically along the up and down direction, and the second inlet portion of the first housing and the second inlet portion of the second housing are formed symmetrically along the up and down direction.

12. The ventilation apparatus of claim 1, wherein
the housing is formed of an insulating material.

## Patentansprüche

1. Belüftungsvorrichtung (1), umfassend:
ein Gehäuse (10), das Folgendes enthält:
einen Einlassströmungsweg (15), der bereitgestellt ist, um Außenluft, die durch einen ersten Einlass (11) eingeführt wird, so zu führen, dass sie durch einen ersten Auslass (12) zu einem Innenraum (I) strömt,
einen Auslassströmungsweg (16), der bereitgestellt ist, um Innenluft, die durch einen zweiten Einlass (13) eingeführt wird, so zu führen, dass sie durch einen zweiten Auslass (14) zu einem Außenraum (O) strömt,
einen Verbindungsströmungsweg (19), der bereitgestellt ist, um den Einlassströmungsweg (15) mit dem Auslassströmungsweg (16) zu verbinden, und
eine Verbindungswegöffnungs- und -schließeinheit (90), die dazu konfiguriert ist, den Verbindungsströmungsweg (19) selektiv zu öffnen und zu schließen;
einen Gesamtenthalpiewärmetauscher (71), der bereitgestellt ist, um Wärme mit Luft, die entlang des Einlassströmungswegs (15) strömt, und Luft, die entlang des Auslassströmungswegs (16) strömt, miteinander auszutauschen;
einen Wärmetauscher (81), der dazu konfiguriert ist, Feuchtigkeit in der Luft, die entlang des Einlassströmungswegs (15) strömt, zu entfernen,
wobei der Verbindungsströmungsweg (19) so bereitgestellt ist, dass er ermöglicht, dass die durch den zweiten Einlass (13) eingeführte Innenluft durch den Wärmetauscher (81) verläuft und zu dem ersten Auslass (12) strömt, während verhindert wird, dass die Innenluft zu dem Gesamtenthalpiewärmetauscher (71) strömt, und
wobei das Gehäuse (10) ferner Folgendes umfasst:
eine erste Einlasskammer (17a), die einen Abschnitt des Einlassströmungswegs ausbildet und zwischen dem ersten Einlass und dem Gesamtenthalpiewärmetauscher positioniert ist;
eine zweite Einlasskammer (17b), die einen weiteren Abschnitt des Einlassströmungswegs ausbildet und zwischen dem ersten Auslass und dem Gesamtenthalpiewärmetauscher positioniert ist;
eine erste Auslasskammer (18a), die einen Abschnitt des Auslassströmungswegs ausbildet und zwischen dem zweiten Einlass und dem Gesamtenthalpiewärmetauscher positioniert ist;
eine zweite Auslasskammer (18b), die einen weiteren Abschnitt des Auslassströmungswegs ausbildet und zwischen dem zweiten Auslass und dem Gesamtenthalpiewärmetauscher positioniert ist;
ein erstes Gehäuse (30), das ein erstes Loch (35) umfasst, das bereitgestellt ist, um zu ermöglichen, dass der Gesamtenthalpiewärmetauscher (71) zu einer Außenseite des Gehäuses herausgezogen wird; und
ein zweites Gehäuse (20), das in einer Aufwärts- und Abwärtsrichtung an das erste Gehäuse koppelbar ist und ein zweites Loch (25) umfasst, das an einer anderen Oberfläche des Gehäuses angeordnet und in einer Form, die dem ersten Loch in der Aufwärts- und Abwärtsrichtung entspricht, ausgebildet ist,
wobei die Belüftungsvorrichtung (1) ferner eine Ablaufschale (82) umfasst, die bereitgestellt ist, um kondensiertes Wasser zu sammeln, das durch den Wärmetauscher (81) erzeugt wird,
wobei der Wärmetauscher (81) in der zweiten Einlasskammer (17b) angeordnet ist,
wobei der Verbindungsströmungsweg (19) bereitgestellt ist, um die erste Auslasskammer (18a) mit der zweiten Einlasskammer (17b) zu verbinden, und
wobei das erste Loch (35) asymmetrisch auf einer Oberfläche in Bezug auf eine Mittellinie der einen Oberfläche ausgebildet ist, die sich entlang einer Langachsenrichtung oder einer Kurzachsenrichtung der Oberfläche des Gehäuses (10) erstreckt, und bereitgestellt ist, um zu ermöglichen, dass die Ablaufschale (82) zu einer Außenseite des Gehäuses (10) herausgezogen wird.

2. Belüftungsvorrichtung nach Anspruch 1, ferner umfassend:
einen Filter (72), der bereitgestellt ist, um Fremdstoffe in der durch den ersten Einlass eingeführten Außenluft zu sammeln, und der so angeordnet ist, dass er einem Einlaufende des Gesamtenthalpiewärmetauschers zugewandt ist.

3. Belüftungsvorrichtung nach Anspruch 2, wobei
der Verbindungsströmungsweg so bereitgestellt, dass er ermöglicht, dass die Innenluft, die durch den zweiten Einlass eingeführt wird, durch den Wärmetauscher verläuft und zu dem ersten Auslass strömt, während verhindert wird, dass die Innenluft zu dem Gesamtenthalpiewärmetauscher und dem Filter strömt.

4. Belüftungsvorrichtung nach Anspruch 1, ferner umfassend:
ein erstes Gebläse (61), das entlang des Einlassströmungswegs bereitgestellt ist, um die Außenluft zu bewegen; und
ein zweites Gebläse (62), das entlang des Auslassströmungswegs bereitgestellt ist, um die Innenluft zu bewegen,
wobei das erste Gebläse in der zweiten Einlasskammer angeordnet ist; und das zweite Gebläse in der zweiten Auslasskammer angeordnet ist.

5. Belüftungsvorrichtung nach Anspruch 4, wobei
das Gehäuse ferner eine erste Einlassöffnungs- und -schließeinheit (91) umfasst, die dazu konfiguriert ist, den ersten Einlass zu öffnen und zu schließen,
wobei die erste Einlassöffnungs- und -schließeinheit den ersten Einlass als Reaktion darauf schließt, dass sich die Verbindungswegöffnungs- und -schließeinheit öffnet.

6. Belüftungsvorrichtung nach Anspruch 5, wobei
das zweite Gebläse als Reaktion darauf, dass sich die Verbindungswegöffnungs- und -schließeinheit öffnet, nicht angetrieben wird.

7. Belüftungsvorrichtung nach Anspruch 1, wobei
mindestens ein Abschnitt der zweiten Einlasskammer durch die andere Oberfläche des Gehäuses ausgebildet wird und mindestens ein Abschnitt der ersten Auslasskammer durch die andere Oberfläche des Gehäuses ausgebildet wird,
wobei das Gehäuse ferner eine Trennwand umfasst, die zwischen der zweiten Einlasskammer und der ersten Auslasskammer angeordnet ist und bereitgestellt ist, um die zweite Einlasskammer und die erste Auslasskammer innerhalb des Gehäuses zu definieren,
wobei die Verbindungswegöffnungs- und -schließeinheit an der Trennwand angeordnet ist.

8. Belüftungsvorrichtung nach Anspruch 7, wobei
der Gesamtenthalpiewärmetauscher benachbart zu einer Seite des Gehäuses und nicht zu einer anderen Seite des Gehäuses auf einer Mitte der einen Seite und der anderen Seite des Gehäuses in Bezug auf eine Mittellinie angeordnet ist, die sich entlang einer Richtung erstreckt, in der sich die eine Seite und die andere Seite des Gehäuses erstrecken.

9. Belüftungsvorrichtung nach Anspruch 8, wobei
das erste Loch eine erste Region (35a) umfasst, durch die der Gesamtenthalpiewärmetauscher herausgezogen wird; und eine zweite Region (35b), durch die die Ablaufschale herausgezogen wird,
wobei die erste Region benachbart zu der einen Seite des Gehäuses und nicht zu der anderen Seite des Gehäuses auf der Mitte der einen Seite und der anderen Seite des Gehäuses in Bezug auf die Mittellinie angeordnet ist, die sich entlang der Richtung erstreckt, in der sich die eine Seite und die andere Seite des Gehäuses erstrecken.

10. Belüftungsvorrichtung nach Anspruch 1, wobei
die zweite Einlasskammer so bereitgestellt ist, dass sie einen größeren Innenraum als die erste Einlasskammer, die erste Auslasskammer und die zweite Auslasskammer aufweist.

11. Belüftungsvorrichtung nach Anspruch 1, wobei das erste Gehäuse (30) Folgendes umfasst:
einen ersten Einlassabschnitt (31), der einen Abschnitt des ersten Einlasses (11) ausbildet;
einen ersten Auslassabschnitt (32), der einen Abschnitt des ersten Auslasses (12) ausbildet;
einen zweiten Einlassabschnitt (33), der einen Abschnitt des zweiten Einlasses (13) ausbildet; und
einen zweiten Auslassabschnitt (34), der einen Abschnitt des zweiten Auslasses (14) ausbildet, und
das zweite Gehäuse (20) Folgendes umfasst:
einen ersten Einlassabschnitt (21), der einen weiteren Abschnitt des ersten Einlasses (11) ausbildet;
einen ersten Auslassabschnitt (22), der einen weiteren Abschnitt des ersten Auslasses (12) ausbildet;
einen zweiten Einlassabschnitt (23), der einen weiteren Abschnitt des zweiten Einlasses (13) ausbildet; und
einen zweiten Auslassabschnitt (24), der einen weiteren Abschnitt des zweiten Auslasses (14) ausbildet,
wobei der erste Auslassabschnitt (32) des ersten Gehäuses und der erste Auslassabschnitt (22) des zweiten Gehäuses symmetrisch entlang der Aufwärts- und Abwärtsrichtung ausgebildet sind, der erste Einlassabschnitt des ersten Gehäuses und der erste Einlassabschnitt des zweiten Gehäuses symmetrisch entlang der Aufwärts- und Abwärtsrichtung ausgebildet sind, der zweite Auslassabschnitt des ersten Gehäuses und der zweite Auslassabschnitt des zweiten Gehäuses symmetrisch entlang der Aufwärts- und Abwärtsrichtung ausgebildet sind und der zweite Einlassabschnitt des ersten Gehäuses und der zweite Einlassabschnitt des zweiten Gehäuses symmetrisch entlang der Aufwärts- und Abwärtsrichtung ausgebildet sind.

12. Belüftungsvorrichtung nach Anspruch 1, wobei
das Gehäuse aus einem Isoliermaterial ausgebildet ist.

## Revendications

1. Appareil de ventilation (1), comprenant :
un boîtier (10) comprenant
un trajet d'écoulement d'entrée (15) prévu pour guider l'air extérieur, introduit via une première entrée (11), afin qu'il s'écoule vers un espace intérieur (I) via une première sortie (12),
un trajet d'écoulement de sortie (16) prévu pour guider l'air intérieur, introduit via une seconde entrée (13), afin qu'il s'écoule vers un espace extérieur (O) via une seconde sortie (14),
un trajet d'écoulement de connexion (19) prévu pour connecter le trajet d'écoulement d'entrée (15) au trajet d'écoulement de sortie (16), et
une unité d'ouverture et de fermeture de trajet de connexion (90) conçue pour ouvrir et fermer sélectivement le trajet d'écoulement de connexion (19) ;
un échangeur de chaleur à enthalpie totale (71) prévu pour échanger de la chaleur avec l'air s'écoulant le long du trajet d'écoulement d'entrée (15) et l'air s'écoulant le long du trajet d'écoulement de sortie (16) l'un avec l'autre ;
un échangeur de chaleur (81) conçu pour éliminer l'humidité de l'air s'écoulant le long du trajet d'écoulement d'entrée (15),
dans lequel le trajet d'écoulement de connexion (19) est prévu pour permettre à l'air intérieur, introduit via la seconde entrée (13), de traverser l'échangeur de chaleur (81) et de s'écouler vers la première sortie (12) tout en empêchant l'air intérieur de s'écouler vers l'échangeur de chaleur à enthalpie totale (71), et
dans lequel le boîtier (10) comprend en outre :
une première chambre d'entrée (17a) formant une partie du trajet d'écoulement d'entrée et positionnée entre la première entrée et l'échangeur de chaleur à enthalpie totale ;
une seconde chambre d'entrée (17b) formant une autre partie du trajet d'écoulement d'entrée et positionnée entre la première sortie et l'échangeur de chaleur à enthalpie totale ;
une première chambre de sortie (18a) formant une partie du trajet d'écoulement de sortie et positionnée entre la seconde entrée et l'échangeur de chaleur à enthalpie totale ;
une seconde chambre de sortie (18b) formant une autre partie du trajet d'écoulement de sortie et positionnée entre la seconde sortie et l'échangeur de chaleur à enthalpie totale ;
un premier boîtier (30) comprenant un premier trou (35) prévu pour permettre à l'échangeur de chaleur à enthalpie totale (71) d'être tiré à l'extérieur du boîtier ; et
un second boîtier (20) pouvant être couplé au premier boîtier dans une direction vers le haut et vers le bas, et comprenant un second trou (25) agencé sur une autre surface du boîtier et formé dans une forme correspondant au premier trou dans la direction vers le haut et vers le bas,
dans lequel l'appareil de ventilation (1) comprend en outre un plateau de drainage (82) prévu pour collecter l'eau condensée générée par l'échangeur de chaleur (81),
dans lequel l'échangeur de chaleur (81) est agencé dans la seconde chambre d'entrée (17b),
dans lequel le trajet d'écoulement de connexion (19) est prévu pour connecter la première chambre de sortie (18a) à la seconde chambre d'entrée (17b), et
dans lequel le premier trou (35) est formé de manière asymétrique sur une surface par rapport à une ligne centrale de cette surface s'étendant suivant une direction d'axe long ou d'une direction d'axe court de la surface du boîtier (10), et prévu pour permettre au plateau de drainage (82) d'être tiré à l'extérieur du boîtier (10).

2. Appareil de ventilation selon la revendication 1, comprenant en outre :
un filtre (72) prévu pour recueillir des substances étrangères dans l'air extérieur introduit via la première entrée, et agencé pour faire face à une extrémité d'admission de l'échangeur de chaleur à enthalpie totale.

3. Appareil de ventilation selon la revendication 2, dans lequel
le trajet d'écoulement de connexion prévu pour permettre à l'air intérieur, qui est introduit via la seconde entrée, de traverser l'échangeur de chaleur et de s'écouler vers la première sortie tout en empêchant l'air intérieur de s'écouler vers l'échangeur de chaleur à enthalpie totale et le filtre.

4. Appareil de ventilation selon la revendication 1, comprenant en outre :
un premier ventilateur (61) prévu le long du trajet d'écoulement d'entrée pour déplacer l'air extérieur ; et
un second ventilateur (62) prévu le long du trajet d'écoulement de sortie pour déplacer l'air intérieur,
dans lequel le premier ventilateur est agencé dans la seconde chambre d'entrée ; et le second ventilateur est agencé dans la seconde chambre de sortie.

5. Appareil de ventilation selon la revendication 4, dans lequel
le boîtier comprend en outre une première unité d'ouverture et de fermeture d'entrée (91) conçue pour ouvrir et fermer la première entrée,
dans lequel la première unité d'ouverture et de fermeture d'entrée ferme la première entrée en réponse à l'ouverture de l'unité d'ouverture et de fermeture de trajet de connexion.

6. Appareil de ventilation selon la revendication 5, dans lequel
le second ventilateur n'est pas entraîné en réponse à l'ouverture de l'unité d'ouverture et de fermeture de trajet de connexion.

7. Appareil de ventilation selon la revendication 1, dans lequel
au moins une partie de la seconde chambre d'entrée est formée par l'autre surface du boîtier, et au moins une partie de la première chambre de sortie est formée par l'autre surface du boîtier,
dans lequel le boîtier comprend en outre une paroi de séparation agencée entre la seconde chambre d'entrée et la première chambre de sortie, et prévue pour définir la seconde chambre d'entrée et la première chambre de sortie à l'intérieur du boîtier.
dans lequel l'unité d'ouverture et de fermeture de trajet de connexion est agencée sur la paroi de séparation.

8. Appareil de ventilation selon la revendication 7, dans lequel
l'échangeur de chaleur à enthalpie totale est agencé adjacent à un côté du boîtier plutôt qu'à un autre côté du boîtier sur un centre du premier côté et de l'autre côté du boîtier par rapport à une ligne centrale s'étendant suivant une direction dans laquelle le premier côté et l'autre côté du boîtier s'étendent.

9. Appareil de ventilation selon la revendication 8, dans lequel
le premier trou comprend une première région (35a) à travers laquelle l'échangeur de chaleur à enthalpie totale est tiré à l'extérieur ; et une seconde région (35b) à travers laquelle le plateau de drainage est tiré à l'extérieur,
dans lequel la première région est agencée adjacente au premier côté du boîtier plutôt qu'à l'autre côté du boîtier sur le centre du premier côté et de l'autre côté du boîtier par rapport à la ligne centrale s'étendant suivant la direction dans laquelle le premier côté et l'autre côté du boîtier s'étendent.

10. Appareil de ventilation selon la revendication 1, dans lequel
la seconde chambre d'entrée prévue pour avoir un espace interne plus grand que la première chambre d'entrée, la première chambre de sortie et la seconde chambre de sortie.

11. Appareil de ventilation selon la revendication 1, dans lequel le premier boîtier (30) comprend
une première partie d'entrée (31) formant une partie de la première entrée (11) ;
une première partie de sortie (32) formant une partie de la première sortie (12) ;
une seconde partie d'entrée (33) formant une partie de la seconde entrée (13) ; et
une seconde partie de sortie (34) formant une partie de la seconde sortie (14), et
le second boîtier (20) comprend
une première partie d'entrée (21) formant une autre partie de la première entrée (11) ;
une première partie de sortie (22) formant une autre partie de la première sortie (12) ;
une seconde partie d'entrée (23) formant une autre partie de la seconde entrée (13) ; et
une seconde partie de sortie (24) formant une autre partie de la seconde sortie (14),
dans lequel la première partie de sortie (32) du premier boîtier et la première partie de sortie (22) du second boîtier sont formées symétriquement suivant la direction vers le haut et vers le bas, la première partie d'entrée du premier boîtier et la première partie d'entrée du second boîtier sont formées symétriquement suivant la direction vers le haut et vers le bas, la seconde partie de sortie du premier boîtier et la seconde partie de sortie du second boîtier sont formées symétriquement suivant la direction vers le haut et vers le bas, et la seconde partie d'entrée du premier boîtier et la seconde partie d'entrée du second boîtier sont formées symétriquement suivant la direction vers le haut et vers le bas.

12. Appareil de ventilation selon la revendication 1, dans lequel
le boîtier est formé d'un matériau isolant.
